(19) Europäisches Patentamt

European Patent Office

Office européen des brevets

(11) **EP 4 155 580 B1**

(12) **EUROPÄISCHE PATENTSCHRIFT**

(45) Veröffentlichungstag und Bekanntmachung des Hinweises auf die Patenterteilung:
**10.12.2025  Patentblatt 2025/50**

(21) Anmeldenummer: **22196575.9**

(22) Anmeldetag: **20.09.2022**

(51) Internationale Patentklassifikation (IPC):
*F16H 25/06* (2006.01)      *F16H 57/08* (2006.01)
*F16H 57/023* (2012.01)      *F16H 57/033* (2012.01)

(52) Gemeinsame Patentklassifikation (CPC):
**F16H 25/06; F16H 57/023; F16H 57/033;
F16H 57/082;** F16H 2057/0335

(54) **KOAXIALGETRIEBE**

COAXIAL TRANSMISSION

TRANSMISSION COAXIALE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität:  **24.09.2021  DE 102021124755**

(43) Veröffentlichungstag der Anmeldung:
**29.03.2023  Patentblatt 2023/13**

(73) Patentinhaber: **WITTENSTEIN SE
97999 Igersheim (DE)**

(72) Erfinder:
• **Schmidt, Michael
97234 Reichenberg (DE)**
• **Kimmelmann, Martin
97990 Weikersheim (DE)**
• **Kümmeth, Andreas
97342 Obernbreit (DE)**

(74) Vertreter: **Zimmermann & Partner
Patentanwälte mbB
Postfach 330 920
80069 München (DE)**

(56) Entgegenhaltungen:
**CN-A- 110 645 334      DE-A1- 102019 129 662**

**Beschreibung**

Gebiet der Erfindung

Die Erfindung betrifft ein Koaxialgetriebe, insbesondere ein Koaxialgetriebe hergestellt aus einem Bausatz für eine Baureihe von Koaxialgetrieben mit unterschiedlichen Übersetzungen, eine Baureihe von Koaxialgetrieben mit unterschiedlichen Übersetzungen und ein Verfahren zum Herstellen eines Koaxialgetriebes.

Stand der Technik

Aus dem Stand der Technik sind Getriebe bekannt, welche Zahnstifte umfassen, die in einem Zahnträger axial verschieblich gelagert sind. Zum Antrieb der Zahnstifte werden Antriebselemente mit einer Profilierung verwendet. Die Zahnstifte werden in axialer Richtung bewegt und greifen in eine Verzahnung ein, so dass es zu einer Relativbewegung zwischen dem Zahnträger mit den Zahnstiften und der Verzahnung kommt. Die Relativbewegung zwischen Verzahnung und Zahnstiften ist dabei um mindestens eine Größenordnung geringer als die Bewegung des Antriebselementes mit der Profilierung. Auf diese Weise lassen sich hohe Übersetzungen erzielen, Beispiele eines solchen Getriebes sind in der DE 10 2019 129 660 A1, der DE 10 2019 129 662 A1, welche nach Auffassung der Prüfungsabteilung des Europäischen Patentamtes den nächsten Stand der Technik darstellt, und der CN 110 645 334 A veröffentlicht.

Allerdings fallen bei bisher bekannten Lösungen aus dem Stand der Technik hohe Kosten oder ein hoher Aufwand bei der Herstellung von Getrieben mit unterschiedlichen Übersetzungen an.

Offenbarung der Erfindung

Aufgabe der Erfindung ist es, ein Koaxialgetriebe anzugeben, welches gegenüber aus dem Stand der Technik bekannten Koaxialgetrieben verbessert ist, wobei insbesondere eine einfachere oder kostengünstigere Bereitstellung von Koaxialgetrieben mit verschiedenen Übersetzungen erreicht werden soll. Weiterhin ist es Aufgabe der Erfindung, eine Baureihe von Koaxialgetrieben mit unterschiedlichen Übersetzungen und ein Verfahren zum Herstellen eines Koaxialgetriebes anzugeben.

Die Aufgabe wird mit einem Koaxialgetriebe nach dem Anspruch 1 und mit einer Baureihe und einem Verfahren nach den nebengeordneten Ansprüchen gelöst. Vorteilhafte Weiterbildungen und Ausführungsformen ergeben sich aus den Unteransprüchen. Die Erfindung ist im beigefügten Anspruchssatz beschrieben.

Typischerweise sind hierin Ausdrücke wie "axial", "radial" oder "Umfangsrichtung" bezüglich der Drehachse des Koaxialgetriebes zu verstehen, beispielsweise bezüglich der Drehachse der Kurvenscheibe des Koaxialgetriebes.

Bei typischen Ausführungsformen sind die Führungen des Zahnträgers bezüglich der Drehachse des Koaxialgetriebes axial ausgerichtet. Typischerweise sind die Zahnstifte in den Führungen des Zahnträgers axial verschieblich gelagert. Typischerweise ist ein Zahnstift in einer Führung des Zahnträgers in genau einer Richtung verschieblich gelagert, typischerweise in Richtung der Längsachse des Zahnstiftes. Dies kann beispielsweise dadurch erreicht werden, dass der Zahnstift über eine bestimmte Länge, insbesondere über eine bestimmte Länge des Rumpfs entlang der Längsachse des Zahnstifts, einen gleichbleibenden Querschnitt in Verschieberichtung aufweist. Der Zahnstift kann in der Führung derart aufgenommen sein, dass der Zahnstift entlang der Längsachse in der Führung axial bezüglich der Drehachse des Koaxialgetriebes verschieblich gelagert ist. Typischerweise ist eine Führung für einen Zahnstift in dem Zahnträger als Bohrung oder Öffnung mit in axialer Richtung gleichbleibendem Querschnitt ausgeführt. Die Bohrung oder Öffnung ist typischerweise in axialer Richtung durchgehend durch den Zahnträger ausgebildet. Typischerweise sind die Führungen als runde Öffnungen oder Bohrungen, insbesondere als kreisrunde Öffnungen oder Bohrungen ausgeführt. Weitere typische Zahnträger umfassen rechteckige Einfräsungen oder Langlöcher oder Schlitze als Führungen. Der Zahnträger umgreift bei typischen Ausführungsformen die Drehachse in Umfangsrichtung. Insbesondere kann der Zahnträger kreisförmig oder ringförmig ausgebildet sein.

Bei typischen Ausführungsformen ist der Zahnträger aus einer Mehrzahl von Zahnträgern ausgewählt. Typischerweise sind die Zahnträger der Mehrzahl von Zahnträgern jeweils eingerichtet zur Verwirklichung eines der Koaxialgetriebe einer Baureihe von Koaxialgetrieben. Die Koaxialgetriebe der Baureihe weisen typischerweise unterschiedliche Übersetzungen auf. Insbesondere können die Koaxialgetriebe der Baureihe identische Verzahnungsteile umfassen, beispielsweise identische Verzahnungen oder identische Zahnstifte.

Bei typischen Ausführungsformen ist das Koaxialgetriebe aus einem Bausatz hergestellt. Typischerweise umfasst der Bausatz eine Verzahnung, Zahnstifte und einen oder mehrere Zahnträger. Insbesondere kann der Bausatz eine Mehrzahl von Zahnträgern umfassen. Beispielsweise kann aus dem Bausatz durch Auswahl eines Zahnträgers ein Koaxialgetriebe mit einer von mehreren, unterschiedlichen Übersetzungen hergestellt werden. Bei Ausführungsformen können Zahnträger jeweils aus einem Zahnträgervorfertigteil hergestellt sein, insbesondere aus gleichen Zahnträgervorfertigteilen. Die Zahnträgervorfertigteile weisen typischerweise keine Führungen auf, insbesondere keine als Bohrungen oder Öffnungen ausgebildete Führungen. In dem Zahnträgervorfertigteil können die Führungen zum Bereitstellen eines Zahnträgers hergestellt werden, beispielweise gebohrt werden, wobei die Führungen in Umfangsrichtung zum Verwirklichen eines Koaxialgetriebes mit bestimmter Übersetzung angeordnet sind.

Typischerweise sind benachbarte Führungen eines Zahnträgers in Umfangsrichtung um die Drehachse um einen jeweiligen Winkel zueinander beabstandet. Ein Winkel zwischen benachbarten Führungen ist typischerweise der Winkel, welcher zwischen zwei Radii von der Drehachse zu den jeweiligen Mittelpunkten der benachbarten Führungen aufgespannt ist. Typischerweise definiert eine Winkelteilung eines Zahnträgers die Anordnung der Führungen des Zahnträgers in Umfangsrichtung, insbesondere die Winkel zwischen benachbarten Führungen und die Verteilung der Winkel in Umfangsrichtung.

Bei typischen Ausführungsformen umfasst das Koaxialgetriebe eine um die Drehachse rotierbare Kurvenscheibe zum axialen Antrieb der Zahnstifte. Typischerweise umfasst die Kurvenscheibe eine Profilierung als Antriebselement zum axialen Antrieb der Zahnstifte, insbesondere durch Axialhub der Zahnstifte. Typischerweise ist die Profilierung entlang der Umfangsrichtung der Kurvenscheibe mit mindestens einer Erhebung in axialer Richtung ausgeführt, insbesondere mit mindestens zwei oder mindestens drei Erhebungen. Typischerweise folgt die Profilierung der Kurvenscheibe in Abschnitten einer Wendelfläche oder ist in Umfangsrichtung gekrümmt ausgebildet. Typischerweise sind die Kurvenscheibe, der Zahnträger und die Verzahnung in dieser Reihenfolge in einer axialen Richtung angeordnet. Durch den Antrieb der Kurvenscheibe mit der Profilierung kann eine Kraft in Richtung der jeweiligen Längsachse der Zahnstifte auf die Zahnstifte ausgeübt werden, so dass die Zahnstifte in den Führungen des Zahnträgers in Richtung der Verzahnung gedrückt werden.

Bei typischen Ausführungsformen ist die Kurvenscheibe aus einer Mehrzahl von Kurvenscheiben mit unterschiedlichen Anzahlen an axialen Erhebungen ausgewählt. Insbesondere kann der Bausatz eine Mehrzahl von Kurvenscheiben mit unterschiedlichen Anzahlen an axialen Erhebungen umfassen. Bei typischen Ausführungsformen können Kurvenscheiben jeweils aus einem Kurvenscheibenvorfertigteil hergestellt sein, insbesondere aus gleichen Kurvenscheibenvorfertigteilen. Aus einem Kurvenscheibenvorfertigteil kann mindestens eine axiale Erhebung zum Bereitstellen einer Kurvenscheibe herausgearbeitet werden, beispielweise gefräst werden, wobei die Anzahl der axialen Erhebungen zum Verwirklichen eines Koaxialgetriebes mit einer bestimmten Übersetzung bestimmt ist.

Typische Koaxialgetriebe umfassen eine axial ausgerichtete Verzahnung. Insbesondere kann die Verzahnung als Verzahnung eines Planrads ausgeführt sein. Die Verzahnung umfasst typischerweise Verzahnungszähne, welche in Umfangsrichtung aneinandergereiht angeordnet sind. Die Verzahnungszähne umfassen typischerweise jeweils zwei Verzahnungsflanken. Bei typischen Ausführungsformen ist die Verzahnung für die Koaxialgetriebe der Baureihe mit unterschiedlichen Übersetzungen identisch vorgesehen, insbesondere mit identischer Zähnezahl der Verzahnung oder identischem Durchmesser der Verzahnung.

Typische Koaxialgetriebe weisen eine Antriebswelle und eine Abtriebswelle auf. Typischerweise sind die Antriebswelle und die Abtriebswelle um die Drehachse des Koaxialgetriebes drehbar gelagert. Typischerweise sind die Antriebswelle oder die Abtriebswelle oder beide als Hohlwellen ausgeführt. Typischerweise ist die Kurvenscheibe an der Antriebswelle vorgesehen. Bei typischen Ausführungsformen ist der Zahnträger an der Abtriebswelle vorgesehen, wobei insbesondere die Verzahnung oder ein Planrad mit der Verzahnung drehfest mit einem Gehäuse des Koaxialgetriebes verbunden ist oder nicht relativ zu dem Gehäuse drehbar ist. Bei weiteren typischen Ausführungsformen ist eine Verzahnung oder ein Planrad mit der Verzahnung an der Abtriebswelle vorgesehen, wobei insbesondere ein Zahnträger drehfest mit einem Gehäuse des Koaxialgetriebes verbunden ist oder nicht relativ zu dem Gehäuse drehbar ist.

Bei typischen Ausführungsformen umfassen die Zahnstifte jeweils einen in einer Führung des Zahnträgers axial verschieblich gelagerten Rumpf. Typischerweise erstreckt sich der Rumpf entlang der Längsachse eines Zahnstifts. Die Längsachse des Zahnstifts ist typischerweise zumindest im Wesentlichen parallel zu der Drehachse des Koaxialgetriebes ausgerichtet. Typischerweise ist der Rumpf zumindest teilweise in einer Führung des Zahnträgers aufgenommen. Der Rumpf kann entlang der Längsachse des Zahnstifts einen zumindest im Wesentlichen gleichbleibenden Querschnitt aufweisen. In typischen Ausführungsformen ist eine zu der Längsachse des Zahnstifts senkrechte Querschnittsfläche des Rumpfs rund ausgebildet. Insbesondere kann die Querschnittsfläche des Rumpfs kreisrund ausgebildet sein. Typischerweise ist der Rumpf zumindest im Wesentlichen zylinderförmig ausgebildet. Bei weiteren typischen Ausführungsformen weist der Rumpf eine zumindest teilweise nicht-runde Querschnittsfläche auf, beispielsweise eine polygonale Querschnittsfläche, insbesondere eine viereckige Querschnittsfläche, oder eine runde Querschnittsfläche mit mindestens einer Abflachung, insbesondere eine kreisrunde Querschnittsfläche mit mindestens einer Abflachung.

Typischerweise ist zumindest ein Teil der Zahnstifte biegesteif ausgeführt. Der Begriff "biegesteif" ist dabei typischerweise technisch zu verstehen, das heißt, dass Biegungen der Zahnstifte aufgrund der Steifigkeit des Materials der Zahnstifte derart klein sind, dass sie für die Kinematik des Koaxialgetriebes zumindest im Wesentlichen unbedeutend sind.

Bei Ausführungsformen umfasst der Zahnstift in einem der Kurvenscheibe zugewandten Endbereich des Zahnstifts eine Zahnstiftbasis. Die Zahnstiftbasis ist typischerweise eingerichtet zur Lagerung des Zahnstifts an einem Lagersegment des Koaxialgetriebes. Bei typischen Ausführungsformen umfassen die Zahnstifte jeweils einen Kopfbereich. Der Kopfbereich umfasst typischerweise mindestens einen Zahn, insbesondere mindestens zwei Zähne, zum Eingriff mit der Verzahnung. Ein Zahn umfasst typischerweise zwei Zahnflanken. Typischerweise umfasst der Zahn einen Zahnkopf. Der Zahnkopf bildet typischerweise den Übergang zwischen den zwei Zahnflanken des Zahns. Der Zahnkopf ist typischerweise verrundet. Typischerweise verläuft der Zahnkopf zumindest im Wesentlichen in radialer Richtung. Zwischen dem Rumpf eines Zahnstifts und dem mindestens einen Zahn umfasst der Kopfbereich typischerweise einen Sockel. Typischerweise ist der mindestens eine Zahn an dem Sockel angeordnet, insbesondere an einer der Verzahnung zugewandten Seite des Sockels.

Typischerweise ist der Kopfbereich gegenüber dem Rumpf in Umfangsrichtung um die Drehachse verbreitert ausgebildet. Der Kopfbereich kann insbesondere in eine Umfangsrichtung oder in beide Umfangsrichtungen gegenüber dem Rumpf verbreitert ausgebildet sein. Bei Ausführungsformen ist der Kopfbereich gegenüber dem Rumpf in radialer Richtung verbreitert ausgebildet. Der Kopfbereich kann nach radial innen oder nach radial außen bezüglich der Drehachse des Koaxialgetriebes verbreitert sein, insbesondere nach radial innen und nach radial außen. Eine Verbreiterung des Kopfbereichs kann insbesondere den Vorteil bieten, dass eine Eingriffsfläche zum Eingriff des mindestens einen Zahns eines Zahnstifts mit der Verzahnung vergrößert ist. Bei weiteren typischen Ausführungsformen ist der Kopfbereich in radialer Richtung im Wesentlichen gleich breit wie der Rumpf.

Bei typischen Ausführungsformen verlaufen Zahnflanken eines Zahns oder Verzahnungsflanken der Verzahnung zumindest teilweise entlang von Schraubenlinien um die Drehachse. Bei Ausführungsformen kann eine Zahnflanke oder eine Verzahnungsflanke zumindest teilweise entlang einer Wendelfläche verlaufen. Insbesondere kann ein flächiger Eingriff der Zahnflanken und der Verzahnungsflanken bereitgestellt werden.

Bei typischen Ausführungsformen umfasst der Kopfbereich einen einzelnen Zahn, insbesondere einen einzelnen Zahn mit genau zwei Zahnflanken.

Bei weiteren typischen Ausführungsformen umfassen die Zahnstifte jeweils in dem Kopfbereich mindestens zwei Zähne zum Eingriff mit der Verzahnung, insbesondere mindestens drei oder mindestens vier Zähne. Typischerweise umfasst der Kopfbereich maximal 15 Zähne, insbesondere maximal 10 Zähne oder maximal 8 Zähne. Die Zähne sind typischerweise in Umfangsrichtung aneinandergereiht. Zahnstifte mit mehr als einem Zahn können den Vorteil bieten, dass die Zahnstifte zum Eingriff der Zähne mit der Verzahnung mit einem geringeren Zahnhub betrieben werden können.

Typischerweise ist ein Zahnteilungswinkel der mindestens zwei Zähne des Kopfbereichs eines Zahnstifts zumindest im Wesentlichen gleich oder gleich einem Vielfachen eines Verzahnungsteilungswinkel der Verzahnung, insbesondere zumindest im Wesentlichen gleich einem ganzzahligen Vielfachen. Der Zahnteilungswinkel bestimmt sich beispielsweise aus dem Winkel, welchen zwei in Umfangsrichtung benachbarte Zähne, insbesondere Zahnköpfe der benachbarten Zähne, eines Kopfbereichs bezüglich der Drehachse einschließen. Der Verzahnungsteilungswinkel der Verzahnung berechnet sich beispielsweise als 360 Grad geteilt durch die Zähnezahl der Verzahnung.

Bei typischen Ausführungsformen weisen die Zahnstifte jeweils die gleiche Anzahl an Zähnen auf. Insbesondere können die Zahnstifte gleichförmig ausgebildet sein. Insbesondere sind die Zahnstifte als Gleichteile ausgebildet.

Bei weiteren typischen Ausführungsformen umfassen die Zahnstifte eine Gruppe gleichförmiger Zahnstifte und mindestens einen von den gleichförmigen Zahnstiften verschiedenen Sonderzahnstift. Typischerweise weist der mindestens eine Sonderzahnstift im Kopfbereich eine Sonderanzahl an Zähnen auf, welche von einer Anzahl an Zähnen eines Zahnstifts der gleichförmigen Zahnstifte verschieden ist. Beispielsweise kann die Sonderanzahl um mindestens oder genau eins geringer sein als die Anzahl der Zähne eines der gleichförmigen Zahnstifte. Typischerweise ist die Anzahl der gleichförmigen Zahnstifte größer als die Anzahl der Sonderzahnstifte. Bei Ausführungsformen umfassen die Zahnstifte mindestens einen Sonderzahnstift, insbesondere mindestens zwei oder mindestens drei, oder maximal 10 Sonderzahnstifte, insbesondere maximal 7 oder maximal 5. Beispielsweise können die Zahnstifte genau einen Sonderzahnstift umfassen.

Bei typischen Ausführungsformen ist die Anzahl der Zahnstifte für die Koaxialgetriebe der Baureihe gleich. Typischerweise ist die Anzahl der Führungen in den Zahnträgern für die Koaxialgetriebe der Baureihe gleich. Bei Ausführungsformen können Koaxialgetriebe mit unterschiedlichen Übersetzungen mit gleichen Sätzen von Zahnstiften hergestellt sein. Bei weiteren Ausführungsformen können Koaxialgetriebe mit unterschiedlichen Übersetzungen mit unterschiedlichen Sätzen von Zahnstiften hergestellt sein. Beispielsweise kann ein erstes Koaxialgetriebe einer Baureihe unter Verwendung eines ersten Satzes von ersten, gleichförmigen Zahnstiften hergestellt sein, und ein zweites Koaxialgetriebe der Baureihe unter Verwendung einer Gruppe der ersten, gleichförmigen Zahnstifte und unter Verwendung mindestens eines Sonderzahnstifts.

Bei typischen Ausführungsformen, insbesondere bei mindestens einem Koaxialgetriebe einer Baureihe gemäß Ausführungsformen, unterscheidet sich eine rechnerische Zähnezahl des Koaxialgetriebes um eine ganze Zahl ungleich null von dem der Zähnezahl der Verzahnung nächstgelegenen, ganzzahligen Vielfachen der Anzahl der Führungen. Typischerweise ist die Anzahl der axialen Erhebungen der Kurvenscheibe durch die rechnerische Zähnezahl und die Zähnezahl der Verzahnung bestimmt. Insbesondere kann die Anzahl der axialen Erhebungen der Kurvenscheibe gleich dem Betrag der Differenz zwischen der rechnerischen Zähnezahl und der Zähnezahl der Verzahnung sein.

Bei der Erfindung weist der Zahnträger des Koaxialgetriebes eine unregelmäßige Winkelteilung auf. Die unregelmäßige Winkelteilung umfasst eine Gruppe gleicher erster Winkel zwischen benachbarten Führungen und mindestens einen von den ersten Winkeln verschiedenen zweiten Winkel zwischen benachbarten Führungen, insbesondere zwischen weiteren benachbarten Führungen. Bei Ausführungsformen sind die ersten Winkel jeweils gleich 360 Grad mal der Anzahl der Zähne pro Kopfbereich der Zahnstifte geteilt durch die rechnerische Zähnezahl. Typischerweise ist die Summe der ersten Winkel und des mindestens einen zweiten Winkels gleich 360 Grad.

Bei typischen Ausführungsformen ergibt sich die Übersetzung i aus der rechnerischen Zähnezahl $Z_Z$ und der Zähnezahl $Z_V$ der Verzahnung wie folgt:

$$i = 1 - \frac{(-Z_V)}{Z_Z + (-Z_V)}$$

Ausführungsformen können den Vorteil haben, dass Koaxialgetriebe mit unterschiedlichen Übersetzungen unter Verwendung gleicher Verzahnungsteile, beispielsweise unter Verwendung der gleichen Verzahnung oder zumindest teilweise gleicher Zahnstifte hergestellt werden können. Insbesondere können unterschiedliche Übersetzungen durch eine Variation der Winkelteilung in dem Zahnträger oder der rechnerischen Zähnezahl erreicht werden.

Bei typischen Ausführungsformen ist der mindestens eine zweite Winkel größer als ein erster Winkel. Typischerweise ist in einem Winkelbereich eines zweiten Winkels in Umfangsrichtung eine Lücke zwischen benachbarten Zahnstiften ausgebildet. Typischerweise ist die rechnerische Zähnezahl größer als das der Zähnezahl der Verzahnung nächstgelegene, ganzzahlige Vielfache der Anzahl der Führungen. Typischerweise ist der mindestens eine zweite Winkel um 360 Grad geteilt durch die rechnerische Zähnezahl größer als ein erster Winkel. Bei weiteren typischen Ausführungsformen ist der zweite Winkel um ein ganzzahliges Vielfaches von 360 Grad geteilt durch die rechnerische Zähnezahl größer als ein erster Winkel.

Bei weiteren typischen Ausführungsformen ist der mindestens eine zweite Winkel kleiner als ein erster Winkel. Typischerweise ist die rechnerische Zähnezahl kleiner als das der Zähnezahl der Verzahnung nächstgelegene, ganzzahlige Vielfache der Anzahl der Führungen. Typischerweise unterscheidet sich der mindestens eine zweite Winkel von einem ersten Winkel um 360 Grad geteilt durch die rechnerische Zähnezahl und geteilt durch eine natürliche Zahl. Beispielsweise kann eine Führung in beiden Umfangsrichtungen jeweils durch einen zweiten Winkel von einer benachbarten Führung getrennt sein. Die zwei aneinandergrenzenden, zweiten Winkel können zum Beispiel um 360 Grad geteilt durch 2 und geteilt durch die rechnerische Zähnezahl kleiner sein als ein erster Winkel. Insbesondere kann das Koaxialgetriebe einen Sonderzahnstift in der Führung der aneinandergrenzenden zweiten Winkel aufweisen. Der Sonderzahnstift kann eine niedrigere, insbesondere eine um mindestens eins niedrigere Sonderanzahl an Zähnen im Kopfbereich aufweisen als ein Zahnstift der Gruppe der gleichförmigen Zahnstifte des Koaxialgetriebes.

Bei typischen Ausführungsformen weist mindestens einer der Mehrzahl von Zahnträgern eine regelmäßige Winkelteilung auf. Typischerweise sind bei einer regelmäßigen Winkelteilung alle Winkel zwischen benachbarten Führungen gleich groß. Bei typischen Baureihen weist ein Koaxialgetriebe, insbesondere genau ein Koaxialgetriebe der Baureihe, eine rechnerische Zähnezahl auf, welche gleich dem der Zähnezahl der Verzahnung nächstgelegenen, ganzzahligen Vielfachen der Anzahl der Führungen ist.

Typische Koaxialgetriebe gemäß Ausführungsformen umfassen eine Zahnlagerung zur Lagerung der Zahnstifte an einer Kurvenscheibe des Koaxialgetriebes. Typischerweise umfasst die Zahnlagerung Lagersegmente zur verschwenkbaren Lagerung einer Zahnstiftbasis eines Zahnstifts. Die Lagersegmente können auch als Schwenksegmente bezeichnet werden. Bei typischen Ausführungsformen sind die Lagersegmente ringförmig angeordnet. Typischerweise sind die Lagersegmente in Umfangsrichtung zueinander benachbart angeordnet. Bei Ausführungsformen umfassen die Lagersegmente eine Gruppe gleichförmiger Lagersegmente und mindestens ein Sonderlagersegment für mindestens einen Sonderzahnstift. Beispielsweise kann das mindestens eine Sonderlagersegment in Umfangsrichtung schmaler ausgebildet sein als eines der gleichförmigen Lagersegmente. Bei Ausführungsformen sind die Lagersegmente aus Metall hergestellt. In weiteren Ausführungsformen können die Lagersegmente aus Kunststoff hergestellt sein.

Typischerweise sind zwischen der Kurvenscheibe und den Lagersegmenten Wälzkörper angeordnet. Typischerweise sind die Wälzkörper als zylindrische Rollen ausgebildet. Bei typischen Ausführungsformen sind die Wälzkörper mit ihrer Längsachse zumindest im Wesentlichen senkrecht zur Drehachse des Getriebes angeordnet. Bei typischen Ausführungsformen können die Wälzkörper in einem Käfig geführt werden, welcher geeignet ist, dem Hub der Kurvenscheibe dauerelastisch zu folgen. Bei weiteren typischen Ausführungsformen sind die Lagersegmente gleitend an der Kurvenscheibe gelagert.

Typischerweise bilden die Lagersegmente zusammengesetzt einen Kreisring. Typische Lagersegmente können als Kreisringabschnitte, in Trapezform mit geraden Außen- oder Innenkanten oder beidem, oder mit im Wesentlichen rundem Querschnitt, wobei die Kanten in Umfangsrichtung abgeflacht sind, ausgeführt sein.

Typische Ausführungsformen umfassen einen zwischen den Zahnstiften und den Lagersegmenten angeordneten Verdrehsicherungsring, welcher insbesondere eine Verdrehung der Zahnstifte um ihre jeweilige Längsachse verhindert, typischerweise in Bezug auf den Verdrehsicherungsring. Bei typischen Ausführungsformen ist der Verdrehsicherungsring kreisringförmig, um die Drehachse umlaufend, ausgebildet und umfasst Öffnungen zur Aufnahme der Zahnstifte. Typische Verdrehsicherungsringe von Ausführungsformen sind elastisch, z.B. aus Kunststoff, insbesondere aus POM, PA, PEI, PPS, PK oder PEEK, ausgeführt. Auf diese Weise kann ein Anpassen an die Verformung während des Umlaufs der Kurvenscheibe erreicht werden.

Typischerweise ist eine Winkelteilung des Verdrehsicherungsrings, insbesondere die Winkelteilung der Öffnungen zur Aufnahme der Zahnstifte, gleich der Winkelteilung des Zahnträgers. Bei typischen Ausführungsformen ist der Verdrehsicherungsring aus einer Mehrzahl von Verdrehsicherungsringen mit unterschiedlichen Winkelteilungen ausgewählt, insbesondere zur Verwirklichung eines der Koaxialgetriebe der Baureihe von Koaxialgetrieben mit unterschiedlichen Übersetzungen.

Bei typischen Ausführungsformen umfasst der Verdrehsicherungsring mindestens einen Steg. Der mindestens eine Steg ist typischerweise auf der der Kurvenscheibe zugewandten Seite des Verdrehsicherungsrings ausgebildet. Typischerweise ragt der Steg axial in Richtung der Kurvenscheibe hervor. Typischerweise erstreckt sich eine Längsachse des Stegs in radialer Richtung. Typischerweise ist ein Steg in einem Winkelbereich eines zweiten Winkels angeordnet, insbesondere eines zweiten Winkels, welcher größer als einer der ersten Winkel ist. Der Steg kann insbesondere dazu eingerichtet sein, eine Lücke zwischen zwei benachbarten Lagersegmenten zu füllen. Der Steg kann sich beispielsweise in axialer Richtung im Wesentlichen bis zu der axialen Höhe einer Lauffläche der Lagersegmente erstrecken. Stege gemäß Ausführungsformen können den Vorteil bieten, dass ein Herausfallen von Wälzkörpern aus dem Käfig verhindert wird, insbesondere ein Herausfallen eines Wälzkörpers in eine Lücke zwischen zwei Lagersegmenten.

Typische Zahnstifte von Ausführungsformen weisen einen im Querschnitt kreisrunden Zahnrumpf und einen nicht-kreisrunden Querschnitt im Bereich der Zahnstiftbasis zum Eingriff mit einer entsprechend geformten Öffnung in dem Verdrehsicherungsring auf. Typische Querschnitte von Ausführungsformen der Zahnstiftbasis umfassen eine seitliche Abflachung zur Verdrehsicherung des gesamten Zahnstifts um seine Längsachse durch einen Eingriff in eine Öffnung des Verdrehsicherungsrings. Typische Ausführungsformen sehen einen Formschluss im Bereich der Zahnstiftbasis vor. Eine Verdrehsicherung kann insbesondere dafür sorgen, dass der Zahnstift im unbelasteten Zustand nicht gegenüber der Verzahnung verdreht wird. Auf diese Weise kann ein zuverlässiges Eintauchen in die Verzahnung gewährleistet werden.

Bei typischen Ausführungsformen verhindert der Verdrehsicherungsring eine Verdrehung der Lagersegmente zueinander, insbesondere eine Verdrehung um eine Achse parallel zur Drehachse des Getriebes oder um eine Längsachse der Zahnstifte. Weiterhin kann der Verdrehsicherungsring als Montagehilfe für die Lagersegmente dienen. Hierzu werden zur Montage typischerweise die Lagersegmente in den Verdrehsicherungsring eingesetzt und dann gemeinsam auf die bereits im Zahnträger befindlichen Zahnstifte aufgeschoben.

Typischerweise umfasst der Verdrehsicherungsring Nasen in Richtung der Kurvenscheibe zur Lagesicherung der Lagersegmente. Die Nasen können auch als Reliefs bezeichnet werden. Typischerweise greifen die Nasen in entsprechende Randformen innerhalb oder im Randbereich der Lagersegmente ein. Beispielhafte Randformen können abgeflachte Ecken oder Nuten in Kanten sein. Die Nasen können bezüglich der Lagersegmente radial innen oder radial außen angeordnet sein.

Bei Verfahren zum Herstellen eines Koaxialgetriebes aus einer Baureihe umfassend eine Mehrzahl von Koaxialgetrieben mit unterschiedlichen Übersetzungen können insbesondere Koaxialgetriebe nach hierin beschriebenen Ausführungsformen hergestellt werden.

In typischen Ausführungsformen umfasst das Verfahren ein Bereitstellen von Zahnträgervorfertigteilen für einen Zahnträger, insbesondere von gleichen Zahnträgervorfertigteilen. Typischerweise weist ein Zahnträgervorfertigteil keine Führungen für Zahnstifte auf. Das Verfahren kann ein Herstellen einer Mehrzahl von Zahnträgern aus den Zahnträgervorfertigteilen umfassen. Typischerweise umfasst das Herstellen der Mehrzahl von Zahnträgern ein Erzeugen von Führungen in den Zahnträgervorfertigteilen, beispielsweise ein Bohren der Führungen. Typischerweise werden die Zahnträger mit unterschiedlichen Winkelteilungen der Führungen zur Verwirklichung von unterschiedlichen Übersetzungen hergestellt.

In typischen Ausführungsformen umfasst das Verfahren ein Bereitstellen von Kurvenscheibenvorfertigteilen für eine Kurvenscheibe, insbesondere von gleichen Kurvenscheibenvorfertigteilen ohne eine Profilierung mit axialen Erhebungen. Das Verfahren umfasst typischerweise ein Herstellen einer Mehrzahl von Kurvenscheiben aus den Kurvenscheibenvorfertigteilen, beispielsweise durch Fräsen der Profilierung und der axialen Erhebungen aus den Kurvenscheibenvorfertigteilen. Typischerweise werden die Kurvenscheiben mit unterschiedlichen Anzahlen von axialen Erhebungen hergestellt.

Das erfindungsgemäße Verfahren umfasst ein Auswählen eines Zahnträgers aus der Mehrzahl von Zahnträgern, wobei die Zahnträger jeweils unterschiedliche Winkelteilungen der Führungen zur Verwirklichung der unterschiedlichen Übersetzungen aufweisen. Das Verfahren kann ein Auswählen einer Kurvenscheibe aus der Mehrzahl von Kurvenscheiben umfassen. Der Zahnträger oder die Kurvenscheibe werden typischerweise zur Verwirklichung eines Koaxialgetriebes mit einer bestimmten Übersetzung ausgewählt.

Typische Verfahren umfassen ein Bereitstellen einer Mehrzahl von Verdrehsicherungsringen. Die Mehrzahl von Verdrehsicherungen weisen typischerweise unterschiedliche Winkelteilungen auf. Das Verfahren kann in typischen Ausführungsformen ein Auswählen eines Verdrehsicherungsrings aus der Mehrzahl von Verdrehsicherungsringen umfassen. Die Winkelteilung des ausgewählten Verdrehsicherungsrings entspricht typischerweise der Winkelteilung des ausgewählten Zahnträgers.

Das erfindungsgemäße Verfahren umfasst ein Montieren des Koaxialgetriebes mit einer Verzahnung dem ausgewählten Zahnträger und den Zahnstiften, insbesondere mit der ausgewählten Kurvenscheibe oder dem ausgewählten Verdrehsicherungsring.

Das erfindungsgemäße Koaxialgetriebe hat gegenüber dem Stand der Technik den Vorteil, dass Koaxialgetriebe mit unterschiedlichen Übersetzungen einfacher, schneller oder kostengünstiger hergestellt werden können. Insbesondere können Koaxialgetriebe unter Verwendung einer geringeren Anzahl von übersetzungsspezifischen Verzahnungsteilen hergestellt werden. Unterschiedliche Übersetzungen können durch Variation von Produktionsparametern bei einem Setzen von Bohrungen zur Herstellung von Führungen im Zahnträger oder bei einem Fräsen der Kurvenscheibe bereitgestellt werden. Der Aufwand oder die Kosten, je Übersetzung zwei Verzahnungsteile auszulegen, zu simulieren oder zu produzieren, kann bei Ausführungsformen reduziert sein.

Kurze Beschreibung der Zeichnungen

Nachfolgend wird die Erfindung anhand der beiliegenden Zeichnungen näher erläutert, wobei die Figuren zeigen:

Fig. 1        zeigt eine typische Ausführungsform des Koaxialgetriebes in einer teilweisen schematischen Schnittansicht;

Fig. 2A-2B    zeigen schematische Ansichten von Lagersegmenten, Zahnstiften und eines Verdrehsicherungsrings gemäß einer typischen Ausführungsform;

Fig. 3A-3C    zeigen schematische Ansichten von Lagersegmenten, Zahnstiften und eines Verdrehsicherungsrings gemäß einer weiteren typischen Ausführungsform;

Fig. 4        zeigt eine schematische Ansicht eines Zahnträgers gemäß einer weiteren Ausführungsform;

Fig. 5A-5B    zeigen schematische Ansichten eines Verdrehsicherungsrings mit einer dem Zahnträger der Fig. 4 entsprechenden Winkelteilung; und

Fig. 6        zeigt eine schematische Ansicht eines Zahnstift gemäß typischen Ausführungsformen.

Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt.

Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben werden, der Übersichtlichkeit halber nicht mehrfach genannt oder beschrieben. Zur Übersichtlichkeit sind teilweise nicht alle jeweiligen Merkmale mit einem Bezugszeichen versehen, beispielsweise die Lagersegmente oder die Zahnstifte.

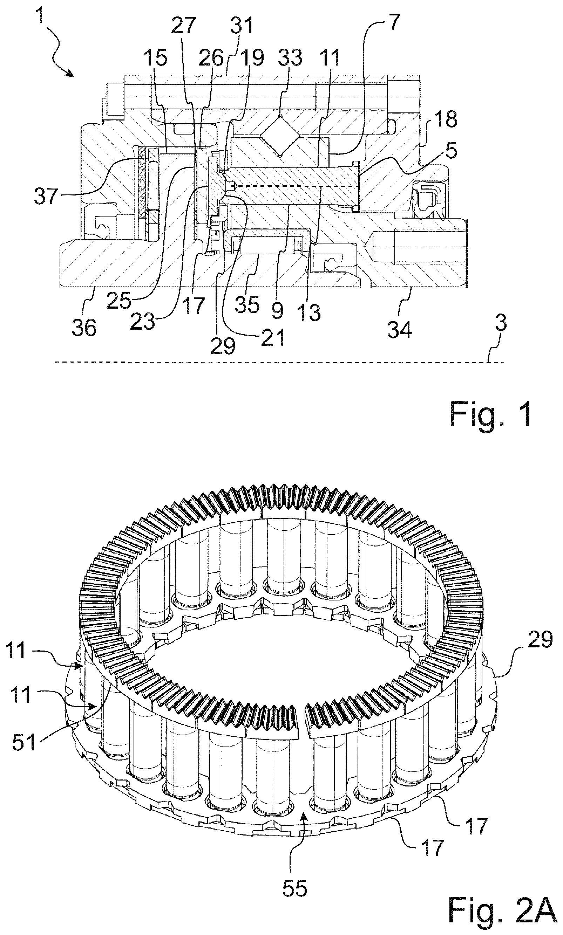

In der Fig. 1 ist ein Ausschnitt einer typischen Ausführungsform der Erfindung in einer schematischen Schnittansicht dargestellt. Die Fig. 1 zeigt einen Teil eines Koaxialgetriebes 1 mit einer bezüglich einer Drehachse 3 des Koaxialgetriebes 1 ausgerichteten Verzahnung 5. Die Verzahnung 5 ist als Verzahnung eines Planrads 18 umlaufend um die Drehachse 3 ausgeführt. Das Planrad 18 ist drehfest mit einem Gehäuse 31 des Koaxialgetriebes 1 verbunden.

Das Koaxialgetriebe 1 umfasst einen Zahnträger 7, welcher an einer Abtriebswelle 34 vorgesehen ist. Die Abtriebswelle 34 ist über ein erstes Lager 33 um die Drehachse 3 drehbar an dem Gehäuse 31 gelagert. Der Zahnträger 7 weist axial ausgerichtete Führungen 9 auf, in welchen jeweils Zahnstifte 11 aufgenommen sind. Die Zahnstifte 11 sind entlang ihrer jeweiligen Längsachsen 13 in den Führungen 9 axial bezüglich der Drehachse 3 verschieblich gelagert.

Die Zahnstifte 11 umfassen jeweils einen Kopfbereich, welcher zum Eingriff mit der Verzahnung 5 ausgerichtet ist, und eine Zahnstiftbasis, welche aus der Führung 9 des jeweiligen Zahnstifts 11 hervorsteht und an einem Lagersegment 17 gelagert ist. Ein Zahnstift 11 umfasst weiterhin einen Rumpf zwischen der Zahnstiftbasis und dem Zahnkopf, wobei der Rumpf zumindest teilweise in der Führung 9 des Zahnstifts 11 aufgenommen ist.

Die Zahnstiftbasis des Zahnstifts 11 lagert mit einer Ausnehmung 21 auf einer teilweise Kugelhaubenförmigen Erhöhung 19 des Lagersegments 17. Zwischen den Zahnstiften 11 und den Lagersegmenten 17 ist ein Verdrehsicherungsring 29 zur Sicherung der Zahnstifte 11 gegen eine Verdrehung um die jeweilige Längsachse 13 angeordnet. Die Lagersegmente 17 sind jeweils mit einer Lauffläche 23 auf ihrer Zahnstift-abgewandten Seite auf einer Wälzlagerung mit Wälzkörpern 27 gelagert, welche wiederum auf einer Profilierung 25 einer Kurvenscheibe 15 des Koaxialgetriebes 1 gelagert ist. Von der Wälzlagerung ist in der Fig. 1 im Wesentlichen ein Steg eines Käfigs 26 für die Wälzkörper 27 (diese teilweise verdeckt) geschnitten zu sehen. Die Wälzkörper 27 sind als Nadelrollen ausgeführt.

Die Kurvenscheibe 15 ist an einer Antriebswelle 36 vorgesehen. Die Antriebswelle 36 ist über ein zweites Lager 35 um die Drehachse 3 drehbar an dem Zahnträger 7 und damit indirekt auch am Gehäuse 31 gelagert. Die Kurvenscheibe 15 ist über ein Axiallager 37 mit Nadelrollen gegenüber dem Gehäuse 31 gelagert. Die Profilierung 25 der Kurvenscheibe 15 ist um die Drehachse 3 umlaufend ausgeführt und weist in der Fig. 1 eine axiale Erhebung in Richtung der Zahnstifte 11 auf.

In Fig. 2A-2B sind schematisch die Lagersegmente 17, der Verdrehsicherungsring 29 und die Zahnstifte 11 ohne Zahnträger und andere Bauteile zur besseren Übersichtlichkeit gezeigt. In der Ausführungsform der Fig. 2A-2B umfasst der Zahnträger (nicht dargestellt) 24 Führungen für 24 Zahnstifte 11. Die Ausführungsform weist eine Zähnezahl $Z_V$=120 der Verzahnung, eine rechnerische Zähnezahl $Z_Z$=121, eine Anzahl p=1 der axialen Erhebungen der Kurvenscheibe und eine Übersetzung i=121 auf. Die Zahnstifte 11 sind gleichförmig ausgebildet. Die Zahnstifte 11 umfassen jeweils einen Kopfbereich mit fünf Zähnen. Die Winkelteilung des Zahnträgers und des Verdrehsicherungsrings 29 umfasst eine Gruppe gleichförmiger erster Winkel von jeweils gerundet 14,876 Grad (=360 Grad *5 /121) und genau einen zweiten Winkel von gerundet 17,851 Grad, welcher der Summe aus einem ersten Winkel und 360 Grad /121 entspricht. Insbesondere ist der zweite Winkel größer als einer der ersten Winkel. Im Winkelbereich des zweiten Winkels ist eine Lücke 55 zwischen den Zahnstiften 11 ausgebildet.

Eine Baureihe gemäß Ausführungsformen, umfassend ein Koaxialgetriebe mit den Verzahnungsteilen der Fig. 2A-2B, umfasst beispielsweise ein weiteres Koaxialgetriebe mit einer gleichen Verzahnung mit Zähnezahl $Z_V$=120 wie in der Ausführungsform der Fig. 2A-2B. Das weitere Koaxialgetriebe weist eine rechnerische Zähnezahl $Z_Z$=122, eine Anzahl p=2 der axialen Erhebungen der Kurvenscheibe und eine Übersetzung i=61 auf. Die Winkelteilung umfasst erste Winkel von 14,754 Grad und zwei zweite Winkel. Die zwei zweiten Winkel sind in Umfangsrichtung beabstandet angeordnet, so dass zwei Lücken zwischen den Zahnstiften ausgebildet sind. Die Baureihe umfasst beispielsweise noch ein weiteres Koaxialgetriebe mit einer Zähnezahl der Verzahnung $Z_V$=120, einer rechnerischen Zähnezahl $Z_Z$=123, einer Anzahl p=3 der axialen Erhebungen der Kurvenscheibe und eine Übersetzung i=41. Die Winkelteilung umfasst erste Winkel von 14,634 Grad und drei in Umfangsrichtung beabstandete, zweite Winkel, so dass in Umfangsrichtung drei Lücken zwischen den Zahnstiften ausgebildet sind.

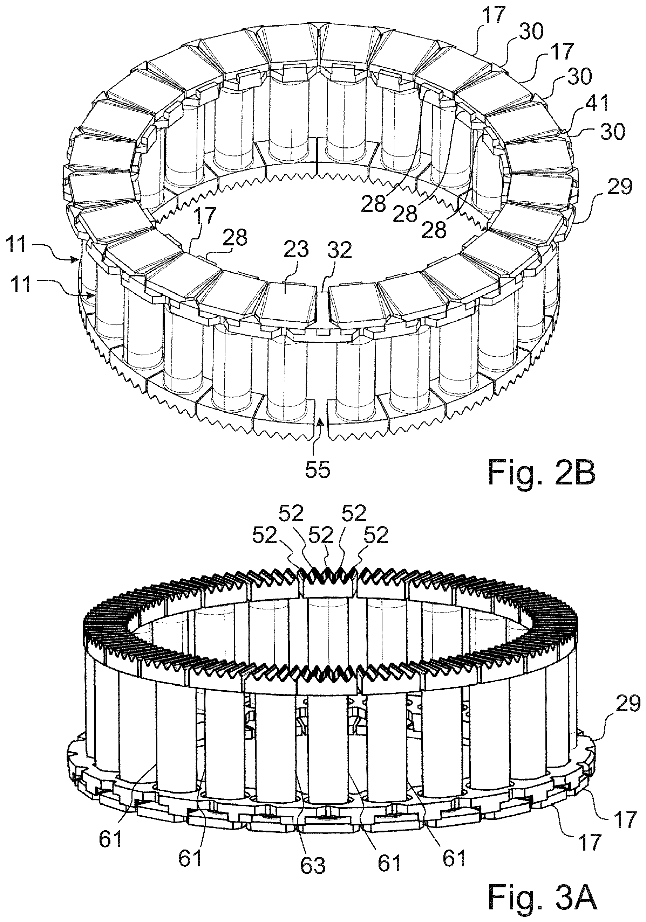

Fig. 2B zeigt eine weitere schematische Ansicht der in der Fig. 2A dargestellten Ausführungsform, insbesondere mit Sicht auf die Laufflächen 23 der Lagersegmente 17. Die Lagersegmente 17 sind gleichförmig ausgebildet. Die Lagersegmente 17 sind relativ zu dem Verdrehsicherungsring 29 unverschieblich, wobei sie durch innere Nasen 28 und äußere Nasen 30 des Verdrehsicherungsrings 29 an einer Verdrehung gehindert werden. Jeweils eine der inneren Nasen 28 stützt eine jeweilige Innenkante eines Lagersegments 17 gegenüber einer Verschiebung nach radial innen ab. Die radial äußeren Ecken 41 der Lagersegmente 17 sind jeweils abgeflacht, um mit den im Querschnitt dreieckigen äußeren Nasen 30 in Eingriff zu stehen, so dass eine Bewegung nach radial außen und eine Verdrehung jeweils verhindert wird. Dabei ist eine der äußeren Nasen 30 jeweils mit zwei Lagersegmenten 17 in Eingriff.

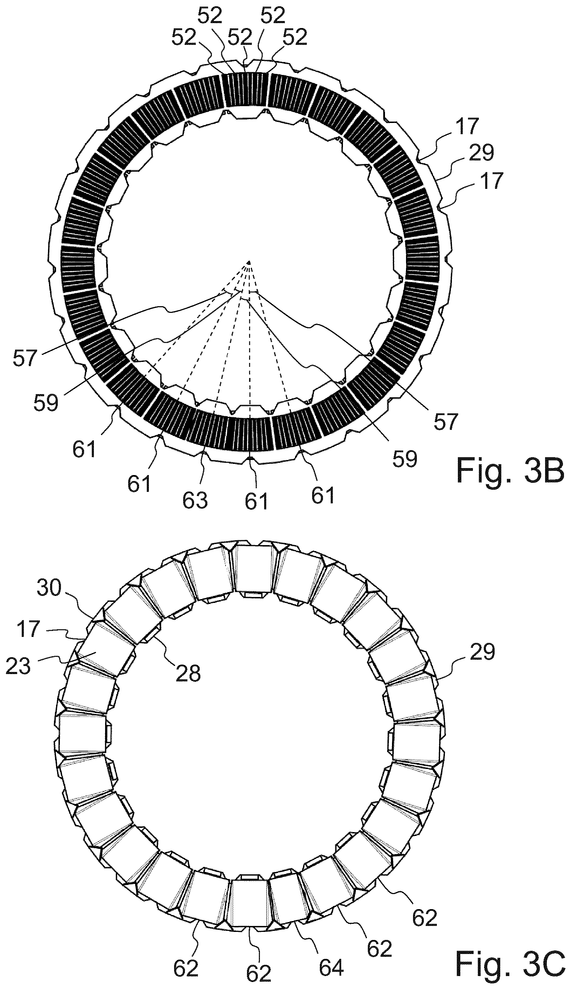

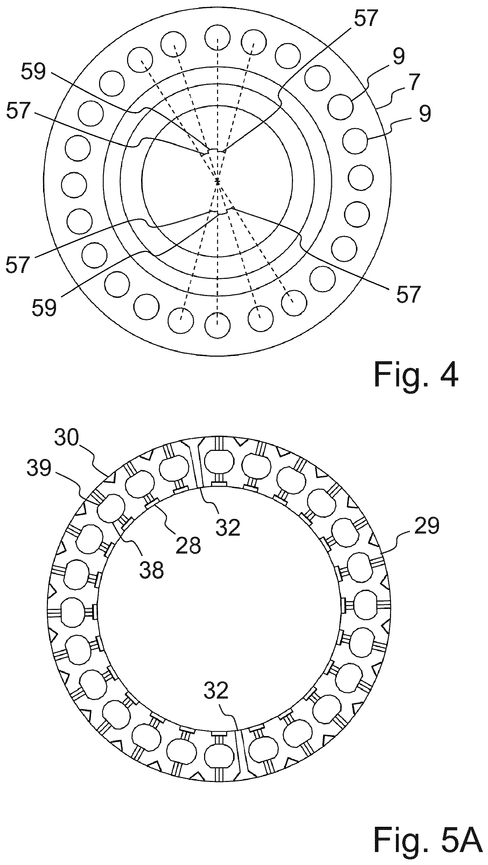

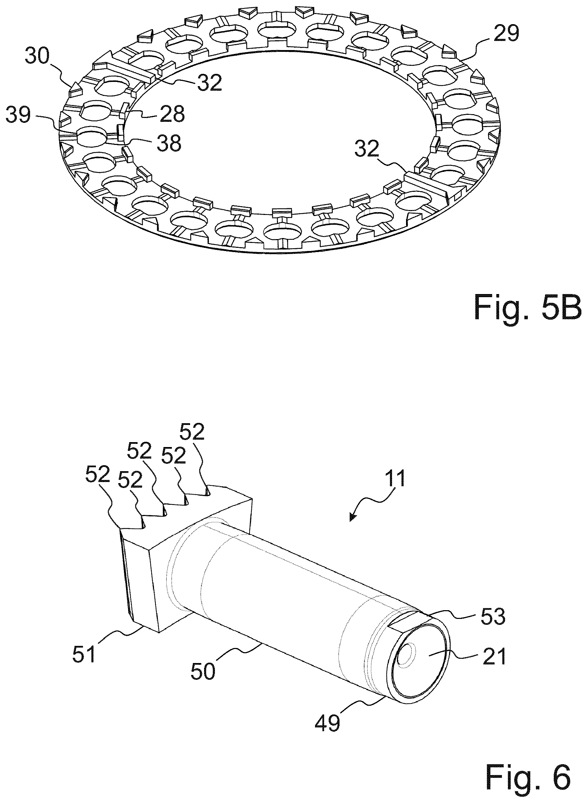

Im Bereich der Lücke 55 zwischen zwei Zahnstiften 11 umfasst der Verdrehsicherungsring 29 auf der der Kurvenscheibe zugewandten Seite des Verdrehsicherungsrings 29 einen Steg 32. Der Steg 32 erstreckt sich in axialer Richtung im Wesentlichen bis zur axialen Höhe der Lauffläche 23 der zum Steg benachbarten Lagersegmente 17. Der Steg 32 verhindert ein Herausfallen von Wälzkörpern aus dem Käfig in die Lücke zwischen den Lagersegmenten 17. Weitere Ausführungsformen von Verdrehsicherungsringen mit inneren Nasen 28, äußeren Nasen 30 oder Stegen 32 sind beispielsweise in Figuren 3C und 5A-5B gezeigt.

Fig. 3A-3C zeigen schematische Ansichten von Lagersegmenten 17, einem Verdrehsicherungsring 29 und Zahnstiften 11 einer weiteren Ausführungsform, wobei der Zahnträger und andere Bauteile des Koaxialgetriebes zur besseren Übersichtlichkeit nicht gezeigt sind. Das Koaxialgetriebe weist eine Zähnezahl $Z_V$=118 der Verzahnung, eine rechnerische Zähnezahl $Z_Z$=119, eine Anzahl p=1 der axialen Erhebungen der Kurvenscheibe und eine Übersetzung i=119 auf. Die Zahnstifte umfassen eine Gruppe gleichförmiger Zahnstifte 61 mit jeweils fünf Zähnen 52 und einen Sonderzahnstift 63 mit vier Zähnen. Wie in der Ansicht der Fig. 3B auf die Zähne 52 der Zahnstifte gezeigt, umfasst die Winkelteilung des Zahnträgers und des Verdrehsicherungsrings 29 eine Gruppe gleicher erster Winkel 57, von welchen der Übersichtlichkeit halber lediglich zwei eingezeichnet sind, und zwei um die Führung des Sonderzahnstifts 63 angeordnete zweite Winkel 59. Die zweiten Winkel 59 sind jeweils kleiner als einer der ersten Winkel 57. Fig. 3C zeigt eine Ansicht auf die Laufflächen 23 der Lagersegmente 17. Die Lagersegmente 17 umfassen eine Gruppe gleichförmiger Lagersegmente 62 und ein dem Sonderzahnstift 63 zugeordnetes Sonderlagersegment 64. Das Sonderlagersegment 64 ist in Umfangsrichtung schmaler ausgebildet als eines der gleichförmigen Lagersegmente 62.

Fig. 4 zeigt einen Zahnträger 7 für ein Koaxialgetriebe gemäß einer weiteren Ausführungsform, insbesondere aus einer weiteren Baureihe mit gleicher Verzahnung wie jener des Koaxialgetriebes der Fig. 3A-3C. Die Winkelteilung der Führungen 9 des Zahnträgers 7 umfasst gleiche, erste Winkel 57 und zwei von einem der ersten Winkel 57 verschiedene zweite Winkel 59, wobei die zweiten Winkel 59 jeweils größer als ein erster Winkel 57 sind. Der Übersichtlichkeit halber sind in Fig. 3B nicht alle ersten Winkel 57 gekennzeichnet. Die zweiten Winkel 59 liegen einander in Umfangsrichtung gegenüber, so dass zwischen in den Zahnträger 7 eingesetzten Zahnstiften in Umfangsrichtung zwei Lücken entstehen. In den Zahnträger 7 können insbesondere gleichförmig ausgebildete Zahnstifte aufgenommen werden. Der Zahnträger 7 ist eingerichtet für ein Koaxialgetriebe mit einer Zähnezahl $Z_V$=118 der Verzahnung, einer rechnerischen Zähnezahl $Z_Z$=122, einer Anzahl p=4 der axialen Erhebungen der Kurvenscheibe und einer Übersetzung i=30,5.

Die weitere Baureihe umfasst beispielsweise ein weiteres Koaxialgetriebe mit einer Zähnezahl $Z_V$=118 der Verzahnung, einer rechnerische Zähnezahl $Z_Z$=121, einer Anzahl p=3 der axialen Erhebungen der Kurvenscheibe und einer Übersetzung i=40,333. In Umfangsrichtung ist eine Lücke zwischen den Zahnstiften ausgebildet. Die weitere Baureihe umfasst beispielsweise noch ein weiteres Koaxialgetriebe mit einer Zähnezahl der Verzahnung $Z_V$=118, einer rechnerischen Zähnezahl $Z_Z$=120, einer Anzahl p=2 der axialen Erhebungen der Kurvenscheibe und einer Übersetzung i=60. Der Zahnträger umfasst 24 als Bohrungen ausgeführte Führungen. Die Winkelteilung der Führungen ist regelmäßig und umfasst lediglich gleiche, erste Winkel. Die Zahnstifte sind gleichförmig ausgebildet. Koaxialgetriebe gemäß Ausführungsformen haben insbesondere den Vorteil, dass Koaxialgetriebe einer Baureihe mit unterschiedlichen Übersetzungen unter Verwendung der gleichen Verzahnung und gleicher Zahnstifte hergestellt werden können.

Fig. 5A-5B zeigen schematische Ansichten eines Verdrehsicherungsrings 29, insbesondere Ansichten der der Kurvenscheibe zugewandten Seite des Verdrehsicherungsrings 29. Der Verdrehsicherungsring 29 weist innere Nasen 28, äußere Nasen 30 und Stege 32 gemäß hierin beschriebenen Ausführungsformen auf. Außerdem weist der Verdrehsicherungsring 29 für jeden der Zahnstifte 11 jeweils eine Öffnung 38 auf. Die Öffnungen 38 weisen an ihrer radial äußeren Seite eine abschnittsweise gerade Einformung 39 auf, welche in den ansonsten kreisringförmigen Querschnitt der Öffnung 38 hineinragt. Jede der Einformungen 39 interagiert jeweils mit einer Abflachung eines Zahnstifts (siehe Fig. 6). Bei Ausführungsformen kann mit einem nicht-kreisrunden Querschnitt des Zahnstifts im Bereich der Zahnstiftbasis ein Eingriff mit der entsprechend geformten Öffnung mit Einformung in dem Verdrehsicherungsring erfolgen, so dass eine Verdrehsicherung des Zahnstifts um seine Längsachse erreicht wird.

In der Fig. 6 ist schematisch ein Zahnstift 11 in einer Neigungsansicht gezeigt. Der Zahnstift 11 umfasst einen Kopfbereich 51, eine Zahnstiftbasis 49 und einen zwischen dem Kopfbereich 51 und der Zahnstiftbasis 49 angeordneten Rumpf 50. Der Zahnstift 11 weist die konkave Ausnehmung 21 an der Zahnstiftbasis und einen verbreiterten Kopfbereich 51 mit einer Mehrzahl von Zähnen 52 auf. Mit dem verbreiterten Kopfbereich 51 werden mehrere Zähne 52 mit der Verzahnung 5 des Planrads 18 in Eingriff gebracht, so dass ein hohes Drehmoment über die Zähne übertragen werden kann. Außerdem ist in der Fig. 6 die Abflachung 53 im Bereich der Zahnstiftbasis 49 zu erkennen, mit welcher ein Verdrehen des Zahnstifts 11 durch Eingriff mit der Einformung in einer jeweiligen Öffnung des Verdrehsicherungsrings verhindert wird.

**Patentansprüche**

1.  Koaxialgetriebe (1), umfassend:

    - eine bezüglich einer Drehachse (3) des Koaxialgetriebes (1) axial ausgerichtete Verzahnung (5),
    - einen Zahnträger (7), welcher jeweils axial ausgerichtete Führungen (9) aufweist, und
    - Zahnstifte (11), welche jeweils einen in einer Führung (9) des Zahnträgers (7) axial verschieblich gelagerten Rumpf (50) und einen Kopfbereich (51) umfassen, wobei der Kopfbereich (51) mindestens einen Zahn (52) zum Eingriff mit der Verzahnung (5) umfasst,

    **dadurch gekennzeichnet, dass**
    der Zahnträger eine unregelmäßige Winkelteilung aufweist, die eine Gruppe gleicher erster Winkel (57) zwischen benachbarten Führungen (9) und mindestens einen von den ersten Winkeln (57) verschiedenen zweiten Winkel (59) zwischen benachbarten Führungen (9) umfasst.

2.  Koaxialgetriebe (1) nach einem der vorhergehenden Ansprüche, wobei die Zahnstifte (11) jeweils im Kopfbereich (51) mindestens zwei Zähne (52) umfassen.

3.  Koaxialgetriebe (1) nach einem der vorhergehenden Ansprüche, wobei die Zahnstifte (11) gleichförmig ausgebildet sind.

4.  Koaxialgetriebe (1) nach einem der Ansprüche 1 bis 2, wobei die Zahnstifte (11) eine Gruppe gleichförmiger Zahnstifte (61) und mindestens einen von den gleichförmigen Zahnstiften (61) verschiedenen Sonderzahnstift (63) umfassen.

5.  Koaxialgetriebe (1) nach Anspruch 4, wobei der mindestens eine Sonderzahnstift (63) im Kopfbereich (51) eine Sonderanzahl an Zähnen (52) aufweist, welche von einer Anzahl an Zähnen (52) eines Zahnstifts der gleichförmigen Zahnstifte (61) verschieden ist.

**6.** Koaxialgetriebe (1) nach einem der Ansprüche 4 oder 5, weiter umfassend eine Zahnlagerung zur Lagerung der Zahnstifte (11) an einer Kurvenscheibe (15) des Koaxialgetriebes (1), wobei die Zahnlagerung Lagersegmente (17) zur verschwenkbaren Lagerung einer Zahnstiftbasis eines Zahnstifts (11) umfasst, wobei die Lagersegmente (17) eine Gruppe gleichförmiger Lagersegmente (62) und mindestens ein Sonderlagersegment (64) für den mindestens einen Sonderzahnstift (63) umfassen.

**7.** Koaxialgetriebe (1) nach einem der vorhergehenden Ansprüche, wobei das Koaxialgetriebe hergestellt ist aus einem Bausatz für eine Baureihe von Koaxialgetrieben mit unterschiedlichen Übersetzungen, und wobei der Zahnträger (7) aus einer Mehrzahl von Zahnträgern ausgewählt ist, wobei die Zahnträger (7) jeweils unterschiedliche Winkelteilungen der Führungen (9) zur Verwirklichung der unterschiedlichen Übersetzungen aufweisen.

**8.** Koaxialgetriebe (1) nach Anspruch 7, weiter umfassend einen Verdrehsicherungsring (29) zur Verdrehsicherung der Zahnstifte (11), wobei eine Winkelteilung des Verdrehsicherungsrings (29) gleich der Winkelteilung des Zahnträgers (7) ist, und wobei der Verdrehsicherungsring (29) aus einer Mehrzahl von Verdrehsicherungsringen mit unterschiedlichen Winkelteilungen ausgewählt ist.

**9.** Koaxialgetriebe (1) nach einem der Ansprüche 7 oder 8, weiter umfassend eine Kurvenscheibe (15), welche in Umfangsrichtung mindestens eine axiale Erhebung zum axialen Antrieb der Zahnstifte (11) aufweist, wobei die Kurvenscheibe (15) aus einer Mehrzahl von Kurvenscheiben mit unterschiedlichen Anzahlen an axialen Erhebungen ausgewählt ist.

**10.** Koaxialgetriebe (1) nach einem der Ansprüche 7 bis 9, wobei die Verzahnung (5) für die Koaxialgetriebe der Baureihe mit unterschiedlichen Übersetzungen identisch ist.

**11.** Baureihe von Koaxialgetrieben mit unterschiedlichen Übersetzungen, jeweils nach einem der Ansprüche 7 bis 10.

**12.** Verfahren zum Herstellen eines Koaxialgetriebes (1) nach einem der Ansprüche 1 bis 10 und einer Baureihe nach Anspruch 11, umfassend eine Mehrzahl von Koaxialgetrieben mit unterschiedlichen Übersetzungen, wobei das Koaxialgetriebe (1) umfasst:

- eine bezüglich einer Drehachse (3) des Koaxialgetriebes (1) axial ausgerichtete Verzahnung (5),
- einen Zahnträger (7), welcher jeweils axial ausgerichtete Führungen (9) aufweist, und
- Zahnstifte (11), welche jeweils einen Rumpf (50), welcher zur axial verschieblichen Lagerung in einer Führung (9) des Zahnträgers (7) eingerichtet ist, und einen Kopfbereich (51) umfassen, wobei der Kopfbereich (51) mindestens einen Zahn (52) zum Eingriff mit der Verzahnung (5) umfasst,

wobei das Verfahren umfasst:

- Auswählen des Zahnträgers (7) aus einer Mehrzahl von Zahnträgern, wobei die Zahnträger jeweils unterschiedliche Winkelteilungen der Führungen (9) zur Verwirklichung der unterschiedlichen Übersetzungen aufweisen, und
- Montieren des Koaxialgetriebes (1) mit der Verzahnung (5), dem ausgewählten Zahnträger (7) und den Zahnstiften (11).

**Claims**

**1.** Coaxial transmission (1), comprising:

- a toothing (5) which is axially aligned with respect to an axis of rotation (3) of the coaxial transmission (1),
- a tooth carrier (7) which has axially aligned guides (9), and
- toothed pins (11), each comprising a body (50), which is axially displaceably mounted in a guide (9) of the tooth carrier (7), and a head region (51), the head region (51) comprising at least one tooth (52) for engagement with the toothing (5),

**characterised in that**
the tooth carrier has an irregular angular pitch, which comprises a group of identical first angles (57) between adjacent guides (9) and at least one second angle (59), different from the first angles (57), between adjacent guides (9).

**2.** Coaxial transmission (1) according to any of the preceding claims, wherein the toothed pins (11) each comprise at least two teeth (52) in the head region (51).

**3.** Coaxial transmission (1) according to any of the preceding claims, wherein the toothed pins (11) are uniform.

**4.** Coaxial transmission (1) according to any of claims 1 to 2, wherein the toothed pins (11) comprise a group of uniform toothed pins (61) and at least one special toothed pin (63) different from the uniform toothed pins (61).

5. Coaxial transmission (1) according to claim 4, wherein the at least one special toothed pin (63) has in the head region (51) a special number of teeth (52) which is different from a number of teeth (52) of a toothed pin of the uniform tooth pins (61).

6. Coaxial transmission (1) according to any of claims 4 or 5, further comprising a tooth mount for mounting the toothed pins (11) on a cam disc (15) of the coaxial transmission (1), wherein the tooth mount comprises mounting segments (17) for pivotably mounting a toothed pin base of a toothed pin (11), wherein the mounting segments (17) comprise a group of uniform mounting segments (62) and at least one special mounting segment (64) for the at least one special toothed pin (63).

7. Coaxial transmission (1) according to any of the preceding claims, wherein the coaxial transmission is manufactured from a kit for a series of coaxial transmissions having different transmission ratios, and wherein the tooth carrier (7) is selected from a plurality of tooth carriers, wherein the tooth carriers (7) each have different angular pitches of the guides (9) for realising the different transmission ratios.

8. Coaxial transmission (1) according to claim 7, further comprising an anti-rotation ring (29) for securing the toothed pins (11) against rotation, wherein an angular pitch of the anti-rotation ring (29) is equal to the angular pitch of the tooth carrier (7), and wherein the anti-rotation ring (29) is selected from a plurality of anti-rotation rings having different angular pitches.

9. Coaxial transmission (1) according to any of claims 7 or 8, further comprising a cam disc (15) which has at least one axial elevation in the circumferential direction for axially driving the toothed pins (11), wherein the cam disc (15) is selected from a plurality of cam discs having different numbers of axial elevations.

10. Coaxial transmission (1) according to any of claims 7 to 9, wherein the toothing (5) for the coaxial transmissions of the series having different transmission ratios is identical.

11. Series of coaxial transmissions having different transmission ratios, each according to any of claims 7 to 10.

12. Method for producing a coaxial transmission (1) according to any of claims 1 to 10 and a series according to claim 11, comprising a plurality of coaxial transmissions having different transmission ratios, wherein the coaxial transmission (1) comprises:

- a toothing (5) which is axially aligned with respect to an axis of rotation (3) of the coaxial transmission (1),
- a tooth carrier (7) which has axially aligned guides (9), and
- toothed pins (11), each comprising a body (50), which is designed for axially displaceable mounting in a guide (9) of the tooth carrier (7), and a head region (51), wherein the head region (51) comprises at least one tooth (52) for engagement with the toothing (5),

wherein the method comprises:

- selecting the tooth carrier (7) from a plurality of tooth carriers, wherein the tooth carriers each have different angular pitches of the guides (9) for realising the different transmission ratios, and
- assembling the coaxial transmission (1) with the toothing (5), the selected tooth carrier (7) and the tooth pins (11).

**Revendications**

1. Engrenage coaxial (1), comprenant

- une denture (5) orientée axialement par rapport à un axe de rotation (3) de l'engrenage coaxial (1),
- un support de dents (7) qui comprend des guides (9), chacun orientés axialement, et
- des tiges dentées (11) qui comprennent chacune un corps (50), monté de manière à pouvoir se déplacer axialement dans un guide (9) du support de dents (7), et une partie de tête (51), la partie de tête (51) comprenant au moins une dent (52) destinée venir en prise avec la denture (5),

**caractérisé en ce que**
le support de dents présente un pas angulaire irrégulier qui comprend un groupe de premiers angles identiques (57) entre des guides adjacents (9) et au moins un deuxième angle (59) entre des guides adjacents (9), qui diffère des premiers angles (57).

2. Engrenage coaxial (1) selon la revendication précédente, dans lequel les tiges dentées (11) comprennent chacune au moins deux dents (52) dans la partie de tête (51).

3. Engrenage coaxial (1) selon l'une des revendications précédentes, dans lequel les tiges dentées (11) sont uniformes.

**4.** Engrenage coaxial (1) selon l'une des revendications 1 à 2,
dans lequel les tiges dentées (11) comprennent un groupe de tiges dentées uniformes (61) et au moins une tige dentée spéciale (63) différente des tiges dentées uniformes (61).

**5.** Engrenage coaxial (1) selon la revendication 4,
dans lequel ladite au moins une tige dentée spéciale (63) présente dans la partie de tête (51) un nombre spécial de dents (52) qui est différent d'un nombre de dents (52) d'une tige dentée parmi les tiges dentées uniformes (61).

**6.** Engrenage coaxial (1) selon l'une des revendications 4 ou 5,
comprenant en outre un palier denté pour loger les tiges dentées (11) sur une came (15) de l'engrenage coaxial (1), le palier denté comprenant des segments de palier (17) pour le montage pivotant d'une base d'une tige dentée (11), les segments de palier (17) comprenant un groupe de segments de palier uniformes (62) et au moins un segment de palier spécial (64) pour ladite au moins une tige dentée spéciale (63).

**7.** Engrenage coaxial (1) selon l'une des revendications précédentes,

dans lequel l'engrenage coaxial est fabriqué à partir d'un kit pour une série d'engrenages coaxiaux avec différents rapports de transmission, et
le support de dents (7) est sélectionné parmi une pluralité de supports de dents, les supports de dents (7) présentant chacun différents pas angulaires des guides (9) pour réaliser les différents rapports de transmission.

**8.** Engrenage coaxial (1) selon la revendication 7,
comprenant en outre une bague anti-rotation (29) pour empêcher la rotation des tiges dentées (11), un pas angulaire de la bague anti-rotation (29) étant égal au pas angulaire du support de dents (7), et la bague anti-rotation (29) étant choisie parmi une pluralité de bagues anti-rotation présentant différents pas angulaires.

**9.** Engrenage coaxial (1) selon l'une des revendications 7 ou 8,
comprenant en outre une came (15) qui présente, dans le sens circonférentiel, au moins un bossage axial pour l'entraînement axial des tiges dentées (11), la came (15) étant choisie parmi une pluralité de cames présentant différents nombres de bossages axiaux.

**10.** Engrenage coaxial (1) selon l'une des revendications 7 à 9,
dans lequel la denture (5) est identique pour les engrenages coaxiaux de la série avec différents rapports de transmission.

**11.** Série d'engrenages coaxiaux avec différents rapports de transmission, chacun selon l'une des revendications 7 à 10.

**12.** Procédé de fabrication d'un engrenage coaxial (1) selon l'une des revendications 1 à 10 et d'une série selon la revendication 11, comprenant une pluralité d'engrenages coaxiaux avec différents rapports de transmission, l'engrenage coaxial (1) comprenant :

- une denture (5) orientée axialement par rapport à un axe de rotation (3) de l'engrenage coaxial (1),
- un support de dents (7) qui comprend des guides (9), chacun orientés axialement, et
- des tiges dentées (11) qui comprennent chacune un corps (50), conçu pour être monté de manière à pouvoir se déplacer axialement dans un guide (9) du support de dents (7), et une partie de tête (51), la partie de tête (51) comprenant au moins une dent (52) destinée à venir en prise avec la denture (5),

le procédé consistant à :

- sélectionner le support de dents (7) parmi une pluralité de supports de dents, les supports de dents présentant chacun différents pas angulaires des guides (9) pour réaliser les différents rapports de transmission, et
- monter l'engrenage coaxial (1) avec la denture (5), le support de dents sélectionné (7) et les tiges dentées (11).

Fig. 1

Fig. 2A

Fig. 2B

Fig. 3A

Fig. 3B

Fig. 3C

Fig. 4

Fig. 5A

Fig. 5B

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019129660 A1
- DE 102019129662 A1

- CN 110645334 A